(19) Europäisches Patentamt
European Patent Office
Office européen des brevets

(11) **EP 2 500 555 A2**

(12) **EUROPÄISCHE PATENTANMELDUNG**

(43) Veröffentlichungstag:
**19.09.2012 Patentblatt 2012/38**

(51) Int Cl.:
*F02D 41/00* (2006.01)   *F02D 41/02* (2006.01)
*F02D 41/14* (2006.01)

(21) Anmeldenummer: **12001455.0**

(22) Anmeldetag: **03.03.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.03.2011   DE 102011013793**

(71) Anmelder: **DEUTZ Aktiengesellschaft**
**51149 Köln (DE)**

(72) Erfinder: **Block, Alexander**
**51145 Köln (DE)**

(54) **Brennkraftmaschine und Verfahren zum Betreiben einer Brennkraftmaschine**

(57) Beschrieben wird eine Brennkraftmaschine, umfassend wenigstens einen Ansaugtrakt, wenigstens einen Abgastrakt, wenigstens eine Aufladevorrichtung, wenigstens einen Ladeluftkühler, wenigstens eine Kraftstoffdirekteinspritzung, wenigstens eine Abgasnachbehandlungsvorrichtung sowie wenigstens ein Motorsteuergerät und wenigstens eine Drosselvorrichtung, wobei die Drosselvorrichtung insbesondere im Bereich des Ansaugtrakts in Strömungsrichtung der Ansaugluft nach dem Ladeluftkühler angeordnet ist.

Figur 1

EP 2 500 555 A2

## Beschreibung

Derartige Verfahren sowie Anordnungen zum Einstellen eines Zustandes eines Abgasstroms sind bekannt. Mittels Erhöhen einer Temperatur des Abgasstroms kann beispielsweise eine Regeneration eines Partikelfilters und/oder eine Entschwefelung von Katalysatoren vorgenommen werden. Dazu kann die Temperatur des Abgasstroms über eine sich bei einem üblichen Betrieb der Brennkraftmaschine ergebende Abgastemperatur angehoben werden. Eine Temperatursteigerung kann auch während eines Kaltstarts der Brennkraftmaschine erfolgen. Ferner ist es bekannt, die Abgastemperatur mittels motorinterner Eingriffe zu steigern. Die DE 10 2004 022 186 A1 beschreibt ein Verfahren zum Zuführen sauber komprimierter Luft zu einem Diesel-Oxidationskatalysator. Hierbei wird komprimierte Luft vor einem Diesel-Oxidationskatalysator eingeleitet. Ein Abgriff der vor den Oxidationskatalysator eingeleiteten Frischluft erfolgt vor einem Turbolader des Motors. Die DE 44 43 133 A1 beschreibt die thermische Regeneration eines Partikelfilters mittels eines Brenners, wobei der Brenner durch einen Abgasturbolader des Verbrennungsmotors mit Verbrennungsluft versorgt wird.

Aus der DE 10 2006 009 943 A1 ist ein Abgasnachbehandlungssystem mit in Strömungsrichtung von Abgas eines Verbrennungsmotors hintereinander angeordneter, abgasdurchströmten ersten Oxidationskatalysator-Einrichtung, einer NOx-Katalysator-Einrichtung zur Entstickung des Abgases, einer Einrichtung zur aktiven Anhebung einer Abgastemperatur mit wenigstens einer zweiten Oxidations-Katalysator-Einrichtung, sowie einer Einrichtung zur Partikelentfernung bekannt.

Daran ist nachteilig, dass es zur Anhebung der Temperatur insbesondere in der Abgasnachbehandlungsvorrichtung einer Zusatzkosten verursachenden zusätzlichen Energiequelle bedarf.

Aufgabe der vorliegenden Erfindung ist es, eine kostengünstige Vorrichtung und ein Verfahren zur Kontrolle der Abgasbedingungen zu schaffen.

Die Lösung dieser Aufgabe erfolgt durch die Merkmale des Anspruchs 1 bzw. des Anspruchs 5. Erfindungsgemäß kommt eine Brennkraftmaschine zum Einsatz mit wenigstens einem Ansaugtrakt, wenigstens einem Abgastrakt, wenigstens einer Aufladevorrichtung, wenigstens einem Ladeluftkühler, wenigstens einer Kraftstoffdirekteinspritzung, wenigstens einer Abgasnachbehandlungsvorrichtung sowie wenigstens ein Motorsteuergerät und wenigstens eine Drosselvorrichtung, wobei die Drosselvorrichtung insbesondere im Bereich des Ansaugtrakts in Strömungsrichtung der Ansaugluft nach dem Ladeluftkühler angeordnet ist, sowie ein Verfahren zum Betreiben der Brennkraftmaschine.

Eine weitere vorteilhafte Ausgestaltung sieht vor, dass im Bereich des Abgastraktes in Strömungsrichtung des Abgases wenigstens ein mit dem Motorsteuergerät kommunizierender Temperatursensor vor einer Abgasnachbehandlungsvorrichtung angeordnet ist. Weitere vorteilhafte Ausgestaltungen sind den Unteransprüchen zu entnehmen.

Figur 1    Prinzipskizze Anordnung Drosselklappe und Messstellen
Figur 2    schematische Darstellung der Temperaturabhängigkeit von Wärmeproduktion und Wärmeverlust nach Semenov (1935)
Figur 3    die beiden Terme $q_P$ (exponentiell) und $q_{Ab}$ (linear) gegen die Temperatur aufgetragen
Figur 4    Temperaturen im Niedrigtemperaturzyklus (KION-Zyklus)
Figur 5    Abgasmassenstrom und Kraftstoffverbrauch im Niedrigtemperaturzyklus (KION-Zyklus)

Zum Betrieb oder zur Regeneration eines Abgasnachbehandlungssystems bei Verbrennungsmotoren ist das Aufheizen der Komponenten des Abgasnachbehandlungssystems von besonderem Interesse. Aufgrund der Temperaturabhängigkeit der Reaktionskinetik ermöglicht und beschleunigt die Anhebung der mittleren Temperatur des Abgasnachbehandlungssystems die Funktionsweise des Abgasnachbehandlungssystems.

Die vorliegende Erfindung ermöglicht die Anhebung der mittleren Temperatur des Abgasnachbehandlungssystems im dynamischen Betrieb des Motors durch die Vermeidung des Wärmeaustrags aus dem Abgasnachbehandlungssystem bei niedrigen Abgasenergien (Abgasmassenstrom und Abgastemperatur). Im stationären Teillastbereich des Motors ist zudem eine Reduzierung der Stickoxidemissionen möglich, was sich insbesondere während des Kaltstarts als positiv herausstellt. Des Weiteren wird die Regenerierung eines Dieselpartikelfilters durch den CRT-Effekt durch die Verringerung der Sauerstoffkonzentration im Abgas, hin zu einem optimalen NO-$NO_x$-Konvertierungsbereich, begünstigt.

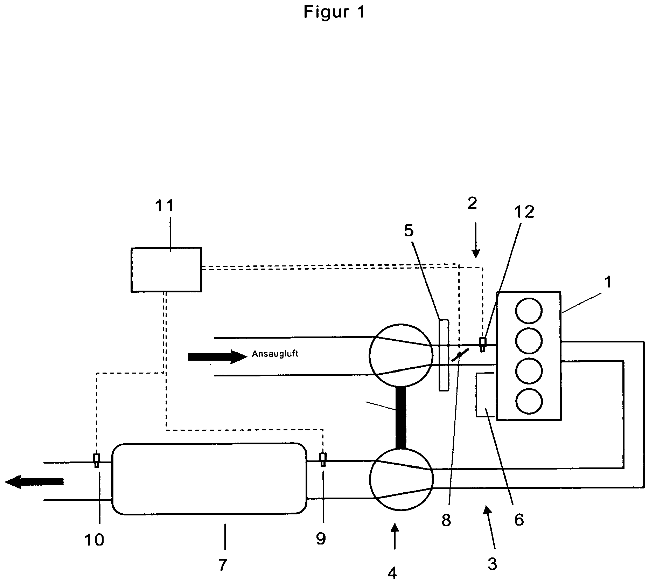

In Figur 1 wird eine Drosselvorrichtung 8 gezeigt, die zwischen Ladeluftkühler 5 und dem Ansaugrohr 2 des Motors 1 angeordnet ist. Mittels dieser Anordnung kann die Zufuhr der Frischluftmenge gesteuert werden. Hierdurch reduziert sich entsprechend der Abgasmassenstrom des Motors 1 und die Abgasrückführrate des Motors 1 wird erhöht. Die Aufladevorrichtung oder auch der Turbolader 4 ist zwischen Ansaugtrakt 2 und Abgastrakt 3 angeordnet. Der Ladeluftkühler 5 ist zwischen Turbolader 4 und Drosselklappe 8 angeordnet. Zwischen der Drosselklappe 8 und der Brennkraftmaschine 1 ist eine Temperatur- und Druckmessvorrichtung 12 angeordnet. Auf der Ansaugseite der Brennkraftmaschine ist eine Kraftstoffeinspritzvorrichtung 6 angeordnet. Im Abgastrakt 3 ist eine Abgasnachbehandlungsvorrichtung 7 angeordnet. In Strömungsrichtung des Abgases ist ein Temperatursensor 10 vor der Abgasnachbehandlungsvorrichtung 7 angeordnet. In Strömungsrichtung des Abgases ist ein Temperatursensor 9 nach der Abgasnachbehandlungsvorrichtung 7 angeordnet. Die Temperatur- bzw. Drucksensoren 9, 10, 12 sind mit dem Motorsteuergerät 11 verbunden und liefern ihre Daten an das Motorsteuergerät 11. Das Motorsteuergerät 11 verarbeitet die eingehenden Daten und steuert z. B. die Drosselklappe 8 an.

Die Drosselklappe 8 kommt bei unterschiedlichen Betriebspunkten bzw. Betriebsweisen des Motors zur Anwendung. Beim Lastabwurf bzw. der Lastaufschaltung des Motors 1 wird während der Änderung der Lastanforderung die Drosselklappe 8 entsprechend den Vorgabewerten gestellt. Im stationären Betrieb des Motors 1 wird die Drosselklappe 8 bei niedrigen Drehmomenten, bzw. Bereichen niedriger Abgasenergiezufuhr zum Abgasnachbehandlungssystem 7 (AGN) entsprechend den Vorgabewerten gestellt.

Die Ansteuerung der Drosselklappe 8 erfolgt sowohl in Abhängigkeit der Temperatur des Motors 1, als auch der mittleren Temperatur des Abgasnachbehandlungssystems 7. Ein Betrieb der Drosselklappe 8 während das Abgasnachbehandlungssystem 7 auf Betriebstemperatur gelangt ist, ist in der Regel nicht oder nur bedingt erforderlich.

Die Ansteuerung der Drosselklappe 7 kann im stationären Motorbetrieb über ein Kennfeld in Abhängigkeit der Einspritzmenge und der Drehzahl erfolgen. Im dynamischen Betrieb ist eine Ansteuerung der Drosselklappe 8 in Abhängigkeit vom Abstand der Einspritzmenge zum Rauchkennfeld anzustreben. Eine Aktivierung der Drosselklappe 8 kann insbesondere im transienten Betrieb des Motors hilfreich sein.

Durch den Anbau der Drosselklappe 8 nach dem Ladeluftkühler 5 kann ein herkömmlicher, nicht öldichter Abgasturbolader 4 verwendet werden. Weiterhin wird ein Überdrehen und somit die Überschreitung der Abgasturbolader-Drehzahl vermieden, da der Abgasturbolader 4 gegen den durch die Drosselklappe 8 erzeugten Staudruck arbeitet. Die Turbine ist hingegen mit dem Abgasmassenstrom beaufschlagt und ermöglicht nach dem Öffnen der Drosselklappe 8 einen schnellen Anlauf des Verdichters und somit einen raschen Aufbau des erforderlichen Ladedrucks. Zur Verhinderung der sogenannten Pumpgrenze beispielsweise beim plötzlichen Schließen der Drosselklappe 8 wird ein Bypass-Ventil insbesondere zwischen Auflädevorrichtung 4 und Brennkraftmaschine 1 angeordnet. Die Ladeluft wird entweder rückgefördert oder abgeblasen, um diesem Problem zu entgehen.

Zum Verständnis der Funktion des Abgasnachbehandlungssystems 7 im Zusammenwirken mit der Brennkraftmaschine 1 und der Drosselklappe 8 folgen einige grundsätzliche Anmerkungen. Oxidation ist eine chemische Reaktion, bei der ein zu oxidierender Stoff Elektronen abgibt. Ein anderer Stoff nimmt die Elektronen auf und wird dadurch reduziert. Mit der Oxidation ist also immer auch eine Reduktion verbunden. Beide Reaktionen zusammen werden als Teilreaktionen einer Redoxreaktion betrachtet.

Kinetik ist ein Teilbereich der physikalischen Chemie. Sie beschäftigt sich mit dem zeitlichen Ablauf chemischer Reaktionen (Reaktionskinetik) oder physikalisch-chemischer Vorgänge (z. B. Diffusion, Stoffabscheidung an Oberflächen).

Die grundlegende Größe, mit der in der Kinetik gearbeitet wird, ist die Reaktionsgeschwindigkeit. Sie gibt an, wie viele Teilchen pro Zeit in einer chemischen Reaktion umgesetzt werden. Diese Geschwindigkeit hängt dabei von vielen Faktoren ab. Je nach zugrunde liegendem Modell gibt es unterschiedliche Möglichkeiten, die Reaktionsgeschwindigkeit zu betrachten. Ein wichtiger Faktor, der zu berücksichtigen ist, ist die Konzentration der vorliegenden Stoffe. Je mehr Teilchen in einem Volumen vorliegen, desto mehr Kollisionen werden pro Zeiteinheit vorkommen. Da eine Reaktion aber nur stattfinden kann, wenn zwei Teilchen miteinander kollidieren, steigt die Reaktionsgeschwindigkeit mit der Konzentration der Edukte. Für die Temperaturabhängigkeit der Reaktionsgeschwindigkeit gilt die RGT-Regel (Reaktionsgeschwindigkeit-Temperatur-Regel): Wird die Temperatur für eine chemische Reaktion um 10 K erhöht, erhöht sich die Reaktionsgeschwindigkeit um das 2- bis 4-fache (für eine Reaktion mit einer Aktivierungsenergie um die 50 kJ/mol!).

Mathematisch und physikalisch wird dies mit dem Ansatz von Arrhenius begründet. Nach diesem kann die Temperaturabhängigkeit der Reaktionsgeschwindigkeit mit einer Exponentialfunktion beschrieben werden. Die Temperaturabhängigkeit ist in dem so genannten Geschwindigkeitskoeffizienten enthalten, denn es gilt hier die Arrhenius-Gleichung. Der Geschwindigkeitskoeffizient ist nur dann eine Konstante, solange die Temperatur nicht verändert wird und kann dann auch als Geschwindigkeitskonstante bezeichnet werden.

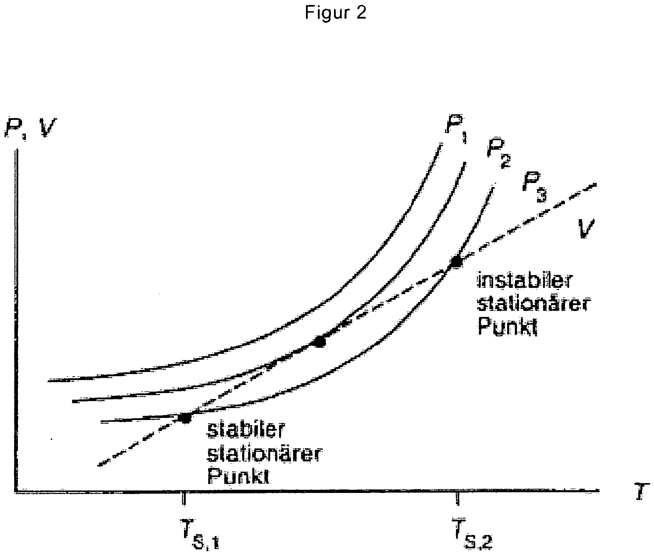

Das qualitative Verhalten des Systems lässt sich verstehen, wenn man im nachfolgenden Diagramm sowohl den Produktions- als auch den Wärmeverlust-Term aufträgt. Für Temperaturen $T_{S1} < T < T_{S2}$ überwiegen die Wärmeverluste die Wärmeproduktion. Das System kühlt also ab, bis der stationäre Zustand $T = T_{S1}$ erreicht ist. Den Punkt $T = T_{S1}$ nennt man aus diesem Grund einen stabilen stationären Punkt. Besitzt das System eine Temperatur $T > T_{S2}$, so überwiegt die Wärmeproduktion. Das System erwärmt sich immer mehr und eine Explosion findet statt. Da im Punkt $T = T_{S2}$ zwar stationäres Verhalten vorliegt, geringe Abweichungen bzw. Störungen von der Stationarität wegführen, bezeichnet man diesen Punkt als instabilen stationären Punkt. Eine schematische Darstellung der Temperaturabhängigkeit von Wärmeproduktion und Wärmeverlust nach Semenov aus dem Jahr 1935 wird in Figur 2 dargestellt.

Thermische Explosion

Ein wesentliches Merkmal von Verbrennungsreaktionen ist, dass die Reaktion exotherm ist. Da die chemischen Reaktionsgeschwindigkeiten im Allgemeinen temperaturabhängig sind ($r = f(ci) * g(T)$, mit $g(T) = k(T) = k_0 * e^{-EA/RT}$), ist durch die mit der Wärmefreisetzung verbundene Temperaturerhöhung des explosiven Gemisches eine exponentielle Zunahme der chemischen Reaktionsgeschwindigkeit gegeben. Wird die freigesetzte Wärme nicht (genügend schnell) aus dem System abgeführt, führt dies zur Explosion. Die Explosionsgrenzen sind dann bestimmt durch die Konkurrenz von Wärmefreisetzung aus der chemischen Reaktion und Wärmeabfuhr.

Für eine einfache Analyse (Semenov, s.a.o.) werden homogene Zustandsgrößen vorausgesetzt, das Reaktionsgefäß befindet sich also überall auf gleicher Temperatur, Druck und Zusammensetzung der explosiven Mischung. Weiterhin soll der Einfachheit halber eine Ein-Schritt-Reaktion für die Verbrennung angenommen werden

$$\text{Brennstoff (B) = Produkte (P)}$$

die exotherm und einfach erster Ordnung in der Konzentration des Brennstoffs sei.

$$r_B = -c_B k_0\, e^{\,-EA/RT}$$

Vor Einsetzten der Explosion ist der Brennstoffumsatz gering, so dass zur Ermittlung der Explosionsgrenze nach dem oben angegebenen Kriterium mit konstanter Brennstoffkonzentration $c_{B0}$ gerechnet werden kann. Die Wärmefreisetzung aus der chemischen Reaktion ist dann

$$q_P = \Delta_R h * r_B = (h_B - h_P) * c_{B0} k_0\, e^{\,-EA/RT}$$

Die Gleichung zeigt, dass die Geschwindigkeit der Wärmefreisetzung exponentiell mit der Temperatur ansteigt. Für die Wärmeabführung aus dem Reaktionsgefäß kann einfach geschrieben werden

$$q_{Ab} = \alpha_{ges} * F/V * (T - T_W) = \alpha_{ges}\, 1/D_{B^*}(T - T_W)$$

Hierbei ist $\alpha_{ges}$ der Gesamtwärmeübergangskoeffizient für die Wärmeübertragung von dem Gefäßinhalt auf die Gefäßwand und $T_w$ die Wandtemperatur. Wie man sieht, ist die Geschwindigkeit der Wärmeabführung proportional zur Temperatur.
Die Differenz zwischen freigesetzter Wärme und abgeführter Wärme führt zur Temperaturänderung im explosionsfähigen Gemisch, also

$$c_{ges} * cp * dT/dt = q_P - q_{Ab}$$

$$= (h_B . h_P) * c_{B0} * k_0 * e^{-EA/RT} - \alpha_{ges} * 1/D_{B^*}(T - T_W)$$

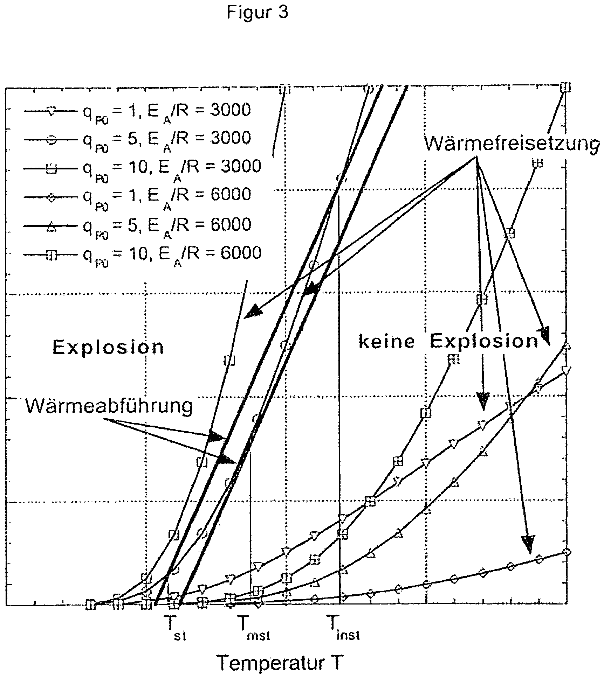

Ist $q_P = q_{Ab}$ wird $dT = dt = 0$ und die Verbrennungsreaktion läuft bei stationärer Temperatur ab.
Das Verhalten dieses Systems kann man sich verdeutlichen, wenn man die beiden Terme $q_P$ (exponentiell) und $q_{Ab}$ (linear) gegen die Temperatur aufträgt, wie dies in Figur 3 dargestellt wird.
An diesen Schnittpunkten ist die Wärmefreisetzungsgeschwindigkeit gleich der Wärmeabführungsgeschwindigkeit, so dass die Reaktion stationär bei konstanter Temperatur abläuft. Eine stationäre Reaktion kann nur bei Parameterkombinationen ablaufen, die durch die Schnittpunkte gegeben sind. Alle anderen Parameterkombinationen führen entweder zur Explosion oder zum Verlöschen der Reaktion.

Zünd- bzw. Explosionsgrenzen

Die Zündgrenzen eines Brennstoff/Oxidator-Gemisches begrenzen den Konzentrationsbereich des Brennstoffes im Gemisch mit dem Oxidator, außerhalb dessen keine Unterhaltung einer Verbrennungsreaktion möglich ist. Der physikalisch-chemische Grund hierfür ist, dass außerhalb der Zündgrenzen - unabhängig von der Art und Stärke der Zündquelle - die durch Wärmefreisetzung erreichte adiabate Verbrennungstemperatur und die Konzentration an reaktiven Radikalen nicht ausreicht, um die Verbrennungsreaktion selbstständig zu unterhalten. Daraus ergeben sich einige Folgerungen:

● Es existiert eine brennstoffreiche (obere) und brennstoffarme (untere) Zündgrenze.
● Je "reaktionsfreudiger" ein Brennstoff ist, desto weiter sind seine Zündgrenzen, z. B. Wasserstoff, Ethin.
● Zum Selbstzerfall neigende Brennstoffe weisen im Prinzip keine oberen Zündgrenzen auf.

Die Angabe der Zündgrenzen erfolgt meist als Konzentrationsangabe oder Angabe der Volumenanteile $X_{uz}$, $X_{oz}$. Oft werden die Zündgrenzen auch durch die Luftzahlen $\lambda_{uz}$, $\lambda_{oz}$ gekennzeichnet. Schließlich wird vielfach auch das Äquivalenzverhältnis $\Phi_{uz}$, $\Phi_{oz}$ verwendet, welches der Reziprokwert der Luftzahl ist. Die Definition der Luftzahl ist: tatsächlicher Luftbedarf bezogen auf den minimalen (stöchiometrischen) Luftbedarf. Entsprechend ist das Äquivalenzverhältnis gegeben durch das tatsächliche Brennstoff/-Luft-Verhältnis bezogen auf das stöchiometrische.

Die Zündgrenzen sind temperatur- und druckabhängig. Für Wasserstoff und Kohlenmonoxid werden die Zündgrenzen mit steigendem Druck etwas schmäler. Für Kohlenwasserstoffe erfolgt jedoch mit steigendem Druck eine deutliche Erweiterung der Zündgrenzen, insbesondere der oberen Zündgrenzen.

Die Zündgrenzen werden mit steigender Ausgangstemperatur des Gemisches im Allgemeinen breiter (ein Teil der zur Unterhaltung einer selbständigen Verbrennung notwendigen Enthalpie wird durch das Frischgas eingebracht).

Die erste Zündgrenze ist gegeben durch die Konkurrenz von Diffusion von Kettenträgern an die Wand und chemischen Reaktionen.

Für die zweite Zündgrenze ist die Konkurrenz zwischen kettenverzweigenden Reaktionen und kettenabbrechenden Reaktionen maßgeblich.

Die dritte Zündgrenze schließlich ist durch das Verhältnis von Wärmefreisetzung zu Wärmeabführung an die Wand oder durch die Druckabhängigkeit der einzelnen Reaktionen gegeben. Es ist zu sehen, dass es sich hier um hochnichtlineare Effekte handelt. Das Studium der Zündgrenzen trägt wesentlich zum Verständnis der Verbrennung insgesamt bei.

Bei Kohlenwasserstoffen ist die obere Zündgrenze durch komplexe mehrstufige Zündprozesse strukturiert. Hier liegen vielfach "kalte Flammen" vor, bei denen die Zündung des Gemisches durch die Reaktionsprodukte (Peroxid-Radikale) inhibiert wird. Hier wird die Zündung durch chemische Prozesse wieder abgebrochen, bei denen der Vorläufer einer Kettenverzweigung bei höheren Temperaturen instabil wird.

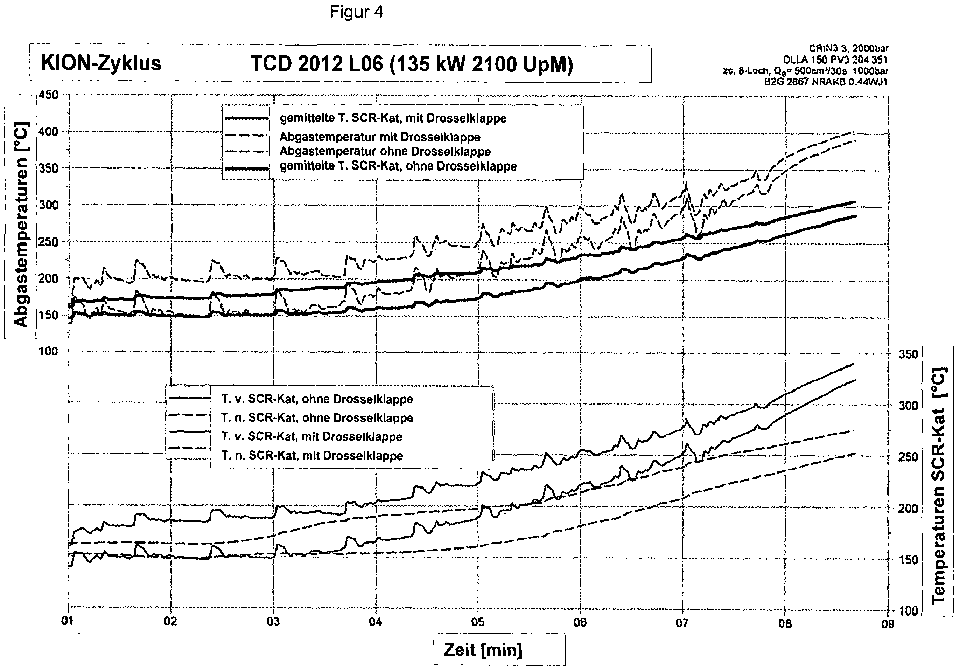

In Figur 4 wird der Temperaturverlauf in einem Niedrigtemperatur- oder auch KION-Zyklus dargestellt.

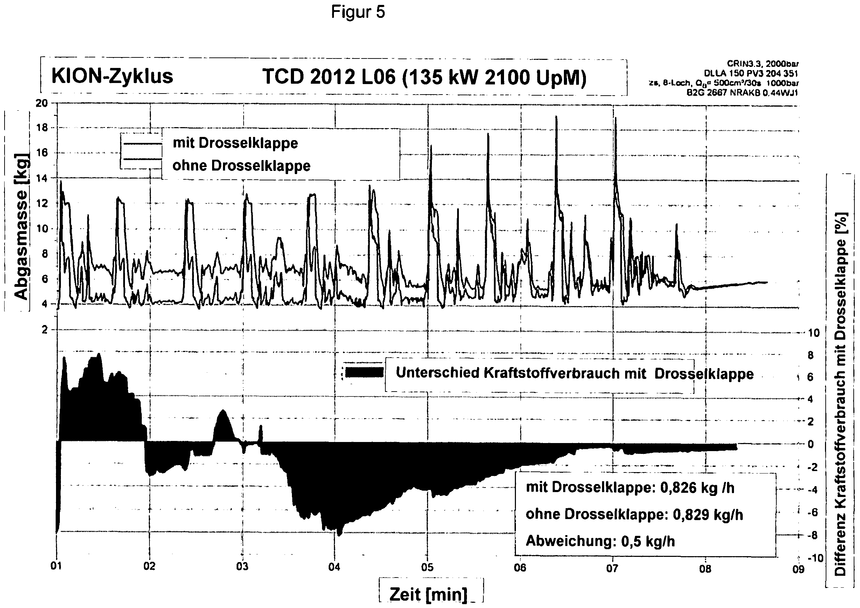

In Figur 5 werden der Abgasmassenstrom und der Kraftstoffverbrauch in einem Niedrigtemperatur- oder auch KION-Zyklus gezeigt.

**Bezugszeichen**

1    Brennkraftmaschine
2    Ansaugtrakt
3    Abgastrakt
4    Aufladevorrichtung
5    Ladeluftkühler
6    Kraftstoffdirekteinspritzung
7    Abgasnachbehandlungsvorrichtung
8    Drosselvorrichtung
9    Temperatursensor
10   Temperatursensor
11   Motorsteuergerät
12   Temperatur- und Druckmessvorrichtung

**Patentansprüche**

1. Brennkraftmaschine, umfassend wenigstens einen Ansaugtrakt, wenigstens einen Abgastrakt, wenigstens eine Aufladevorrichtung, wenigstens einen Ladeluftkühler, wenigstens eine Kraftstoffdirekteinspritzung, wenigstens eine Abgasnachbehandlungsvorrichtung sowie wenigstens ein Motorsteuergerät und wenigstens eine Drosselvorrichtung,
wobei die Drosselvorrichtung insbesondere im Bereich des Ansaugtrakts in Strömungsrichtung der Ansaugluft nach dem Ladeluftkühler angeordnet ist.

2. Brennkraftmaschine nach Anspruch 1,
**dadurch gekennzeichnet, dass** im Bereich des Abgastraktes in Strömungsrichtung des Abgases wenigstens ein mit dem Motorsteuergerät kommunizierender Temperatursensor vor einer Abgasnachbehandlungsvorrichtung angeordnet ist.

3. Brennkraftmaschine nach Anspruch 1 oder 2,
**dadurch gekennzeichnet, dass** im Bereich des Abgastraktes in Strömungsrichtung des Abgases wenigstens ein mit dem Motorsteuergerät kommunizierender Temperatursensor nach einer Abgasnachbehandlungsvorrichtung angeordnet ist.

4. Brennkraftmaschine nach einem oder mehreren der vorgenannten Ansprüche,
**dadurch gekennzeichnet, dass** das Motorsteuergerät insbesondere durch Ansteuerung der Drosselklappe eine Wärmebilanz in der Abgasnachbehandlungsvorrichtung vorzusehen, die geeignet ist, unterhalb der oberen Zündgrenze zu bleiben.

5. Verfahren zum Betreiben einer Brennkraftmaschine,
**dadurch gekennzeichnet, dass** eine Vorrichtung nach einem oder mehreren der vorgenannten Ansprüche zum Einsatz kommt.

6. Verfahren zum Betreiben einer Brennkraftmaschine nach einem oder mehreren der vorgenannten Ansprüche,
**dadurch gekennzeichnet, dass** die Drosselklappe insbesondere bei einem Lastabwurf ganz oder teilweise geschlossen wird.

7. Verfahren zum Betreiben einer Brennkraftmaschine nach einem oder mehreren der vorgenannten Ansprüche,
**dadurch gekennzeichnet, dass** die Drosselklappe insbesondere bei einer Lastaufschaltung ganz oder teilweise geöffnet wird.

8. Verfahren zum Betreiben einer Brennkraftmaschine nach einem oder mehreren der vorgenannten Ansprüche,
**dadurch gekennzeichnet, dass** die Ansteuerung der Drosselklappe insbesondere in Abhängigkeit der Temperatur des Motors und/oder der mittleren Temperatur des Abgasnachbehandlungssystems erfolgt.

9. Verfahren zum Betreiben einer Brennkraftmaschine nach einem oder mehreren der vorgenannten Ansprüche,
**dadurch gekennzeichnet, dass** die Ansteuerung der Drosselklappe insbesondere im stationären Betrieb über ein Kennfeld in Abhängigkeit der Einspritzmenge und der Drehzahl erfolgt.

10. Verfahren zum Betreiben einer Brennkraftmaschine nach einem oder mehreren der vorgenannten Ansprüche,
**dadurch gekennzeichnet, dass** die Ansteuerung der Drosselklappe insbesondere im dynamischen Betrieb in Abhängigkeit vom Abstand der Einspritzmenge zum Rauchkennfeld erfolgt.

11. Verfahren zum Betreiben einer Brennkraftmaschine nach einem oder mehreren der vorgenannten Ansprüche,
**dadurch gekennzeichnet, dass** die Ansteuerung der Drosselklappe in der Weise geschieht, dass in der Abgasnachbehandlungsvorrichtung die Wärmefreisetzungsgeschwindigkeit gleich der Wärmeabführungsgeschwindigkeit ist.

Figur 1

Ansaugluft

Figur 2

Figur 3

Temperatur T

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004022186 A1
- DE 4443133 A1
- DE 102006009943 A1